# EUROPEAN PATENT APPLICATION

(11) **EP 1 438 891 A1**
(43) Date of publication of application: **21.07.2004**
(21) Application number: 04075130.7
(22) Date of filing: 20.01.2004
(51) Int. Cl.: A01G 9/22

(54) **Improved system for arranging and removing a screen at some distance above the ground**

(30) Priority: 20.01.2003 NL 1022438
(71) Applicant: Naaldhoorn II B.V., 2685 LP Poeldijk (NL)
(72) Inventor: Van Bergen Henegouwen, Adrianus Cornelis Gabriel, 2685 EM Poeldijk (NL); Kolk, Hans Jan Pieter, 5986 CD Beringe (NL)
(74) Representative: Land, Addick Adrianus Gosling

(57) **Abstract**

The present invention provides a system (1) for arranging and/or removing a screen (2) some distance above a ground, in particular provided with crops (3), comprising:
- one or more supports (4) which extend at least partly at the distance above the ground, wherein the supports (4) are provided with guide means;
- a screen (2) with edge which is suitable for guiding in or along the guide means of the supports (4); and
- pulling means which are arranged on at least one side of the guide means and which can be coupled releasably to the edge of the screen (2) in order to pull the screen (2) along the supports (4) into a position substantially screening the ground or into a position leaving the ground clear,
wherein the pulling means transmit tensile force onto the edge of the screen (2) over at least a considerable part of the length over which they are coupled to the edge.

## Description

The present invention relates to improvements to a system for arranging or removing a screen some distance above a ground, comprising one or more supports which extend at least partly at the distance above the ground, wherein the supports are provided with guide means; a screen with an edge which is suitable for guiding in or along the guide means of the supports; and pulling means which are arranged on at least one side of the guide means and which can be fastened releasably to the edge of the screen in order to pull the screen along the supports into a position substantially screening the ground or a position leaving the ground clear.

Such a system is suitable for the simpler arrangement of screens in greenhouses or in the open air. The screens can be readily changed and cleaned.

One advantage is to solve the problem that, when the screen with edge is inserted and coupled to the pulling means, the edge can couple incorrectly, wherein the edge becomes jammed in the guide means or, conversely, disengages and separates from the guide means. A further advantage is to improve the transmission of relatively great drive forces onto the pulling means without the pulling means herein being damaged.

The invention further provides a system for arranging and/or removing a screen some distance above a ground, in particular provided with crops, comprising:
- one or more supports which extend at least partly at the distance above the ground, wherein the supports are provided with guide means;
- a screen with edge which is suitable for guiding in or along the guide means of the supports; and
- pulling means which are arranged on at least one side of the guide means and which can be coupled releasably to the edge of the screen in order to pull the screen along the supports into a position substantially screening the ground or into a position leaving the ground clear,
wherein the pulling means transmit tensile force onto the edge of the screen over at least a considerable part of the length over which they are coupled to the edge.

The distribution of the tensile force over a considerable length of the screen edge is found to produce a sufficient transmission for arranging and removing the screen.

In a preferred embodiment the guide means are provided with inserting means for inserting and coupling the edge to the pulling means, comprising:
- a fixed part arranged close to an outer end of the guide means;
- a folding part arranged movably on the fixed part; and
- a lock for locking the folding part.

The inserting means simplify insertion and coupling of the edge of the screen to the pulling means and ensure a sufficient and correct coupling.

In a further preferred embodiment, the edge of the screen comprises bead-like bodies. The forces for arranging and removing the screen are thus sufficiently transmitted and distributed over the length of the edge.

In a preferred embodiment the pulling means comprise a cable or chain provided with bead-like bodies for pulling the screen in and out, wherein the pitch of the bead-like bodies on the cable corresponds with the pitch of the bead-like bodies of the edge. The forces of the pulling means are thus transmitted onto the bead-like bodies of the edge of the screen.

In yet another preferred embodiment, the lock comprises a locking pin. A locking pin provides a sufficient locking and connects readily to the guide means.

In a preferred embodiment the inserting means comprise a guide part for guiding the pulling means. In this manner the inserting means continue to function if the pulling means are deformed by stretching or temperature.

According to another aspect, the invention provides a horticultural greenhouse provided with a system as described above.

Further advantages and features of the present invention are elucidated on the basis of the following description of the preferred embodiments thereof, with reference to the annexed drawings, in which:
Fig. 1 shows a perspective view of a first preferred embodiment of a system according to the present invention;
Fig. 2 shows a partly broken-away perspective view of detail II of fig. 1;
Fig. 3 shows a partly broken-away perspective view of detail III of fig. 1;
Fig. 4 shows a partly broken-away perspective view of a detail in a second preferred embodiment;
Fig. 5 shows a cross-section of detail V of figure 4;
Fig. 6 shows a partly cut-away detail view of drive means, inserting means and pulling means according to the present invention in a preferred embodiment;
Fig. 7 shows an exploded view of the drive means of fig. 6;
Fig. 8 shows a detail view of a screen and pulling means of detail VIII of fig. 7;

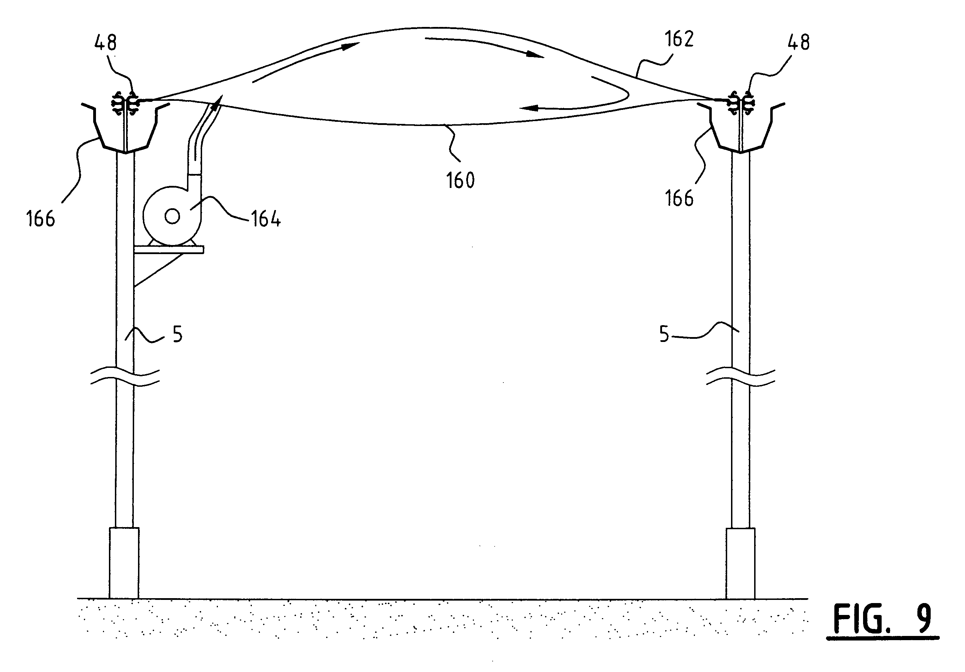

Fig. 9 shows a further preferred embodiment of a screen with edge.

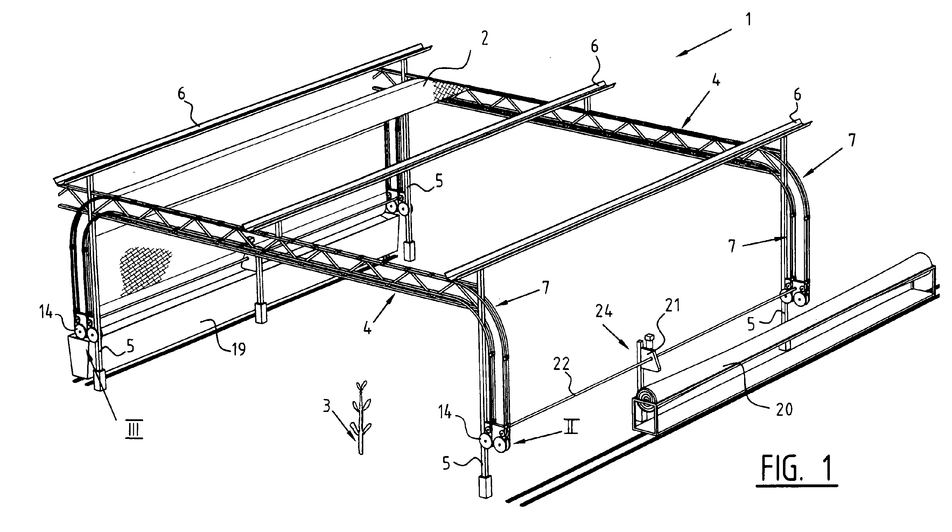

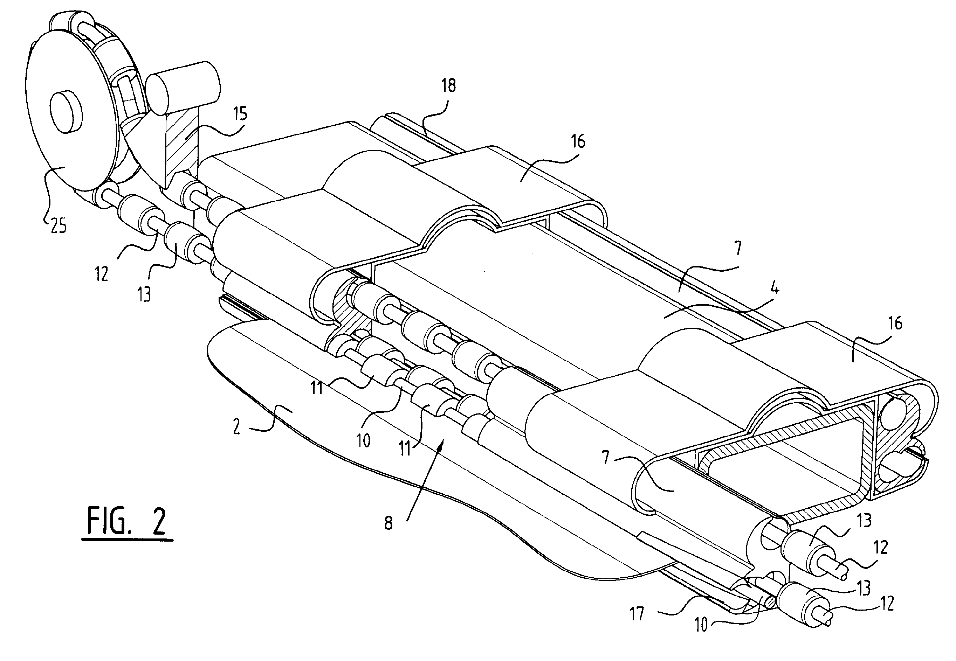

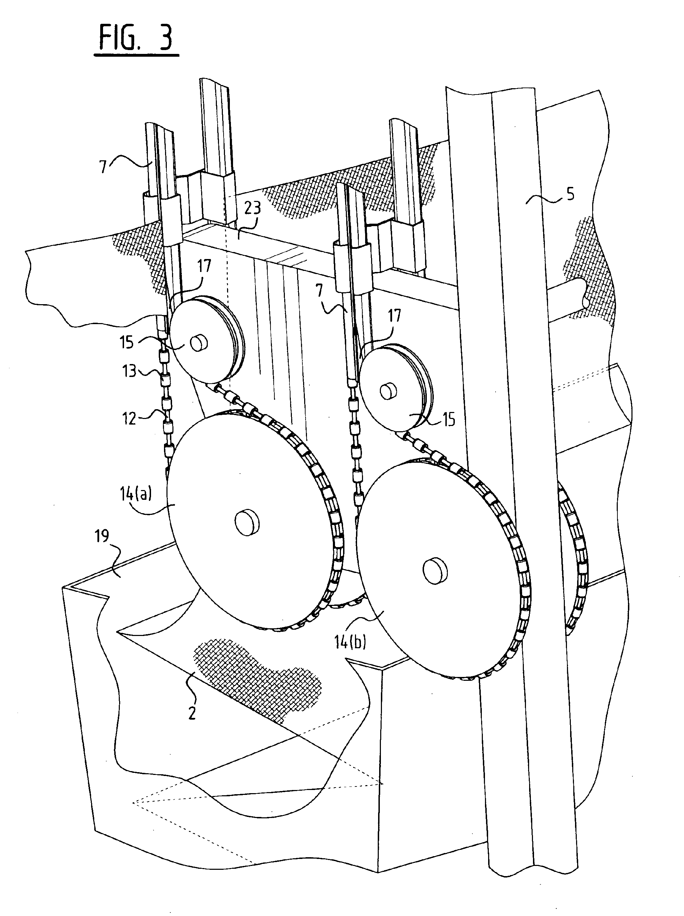

A system 1 (fig. 1) for arranging and/or removing a screen 2 some distance above crop 3 comprises supports 4 which rest on vertical columns 5 and on which beams or gutters 6 rest in transverse direction. The present embodiment relates particularly to (a part of) a greenhouse, although the wall panels and roof panels and further construction are not shown in the figure since these are already known per se, this also being the case for embodiments where the screen is arranged above outdoor crops and/or outdoor products. Profiles 7 are situated on tubular supports 4 for the purpose of guiding the edge 8 (fig. 2) arranged on screen 2. The edge of this screen consists of a flexible cord 10 and beads 11, which are manufactured from for instance steel or plastic and fixed to the cord in moulded or clamped manner. This beaded cord is for instance arranged fixedly or sealed on the screen cloth, foil, gauze or netting by means of a perforated hem strip, wherein the beads protrude through the perforation holes. The beads 11 can likewise be clamped or moulded on a hem strip of the screen. Inside the profile there further runs a chain or a pull cable 12 of for instance steel or plastic, which materials can both provide the necessary tensile force, with beads 13 connected thereto in moulded or clamped manner, wherein this cable 12 can perform a reciprocating movement inside profile 7. The pitch of beads 13 corresponds to the pitch of beads 11 of the thickened edge 8 and forms as it were an endless gear rack which runs in the same cavity of profile 7 and engages on beads 11 of the thickened edge 8. On the upper side of the profile there are arranged slots 18 which enable arranging of pull cable 12 in profile 7 (fig. 2) by placing a tool therethrough. Pulling in and out of the cloth/foil takes place by moving pull cable 12 inside profile 7. Pull cable 12 is driven by a wheel 14 (a, b) which is provided with nest-like recesses which engage on beads 13 of pull cable 12 owing to the corresponding form. On the other end of the profile is situated a reversing wheel 25 (fig. 2). In order to guide pull cable 12 properly in profile 7, additional wheels 15 are arranged close to the entrances to this profile. After inserting the edge 8 in clamps 17, these clamps are closed, whereafter the pulling mechanism 24 comes into operation to pull the edges of cloth 8 into profiles 7. For this purpose this mechanism 24 consists of a motor 21 which transmits force to wheels 14 (a, b) by means of a shaft 22, wherein a gearbox 23 can be placed as desired between shaft 22 and wheels 14 (a or b), which gearbox makes it possible to switch the transmission from a wheel 14a to another available wheel 14b (fig. 3). In this manner it is possible to use a plurality of profiles with a single drive mechanism. By moving one set of the wheels 14a or 14b the cloth is now pulled out of the mobile basket 19 (fig. 3) in which this cloth is situated in zig-zag folded state and which enables easy displacement of the screen. The cloth can also be situated in rolled-up state on a roll 20, which is also mobile. It is thus possible in simple manner to arrange a cloth in profile 7 from the ground floor, wherein this cloth is pulled high into the greenhouse and wherein the space below this cloth can be completely screened off by arranging this cloth.

Profiles 7 are for instance fixed to supports 4 by means of clips 16 (fig. 2), which can for instance be manufactured from steel and/or plastic, and which clips can be placed at intervals from each other in order to clamp the profile fixedly on support 4. Profile 7 herein runs a determined length along the support up to a position where screening is necessary (fig. 1).

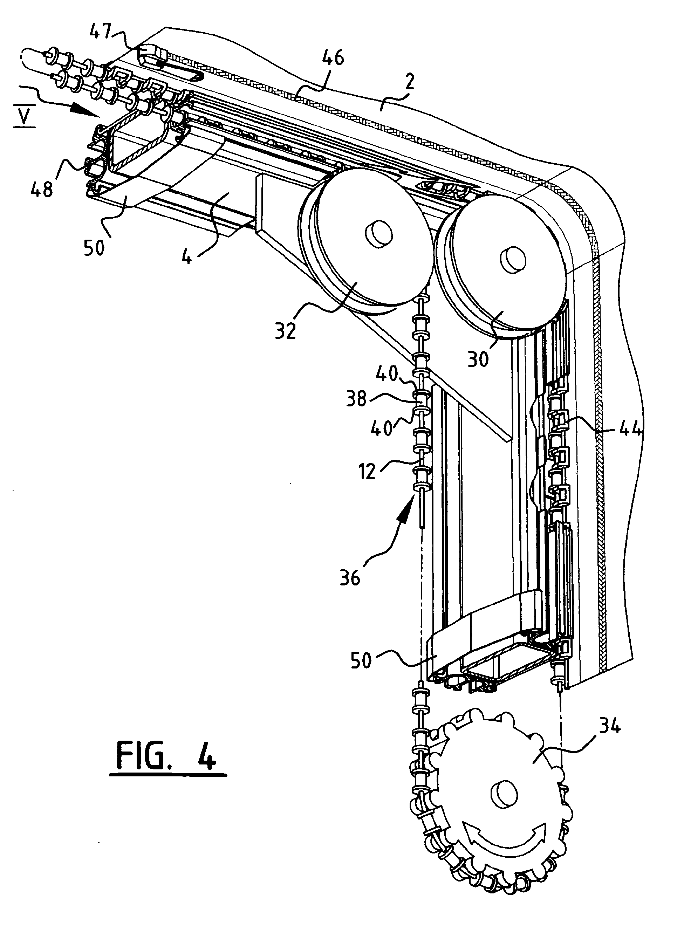

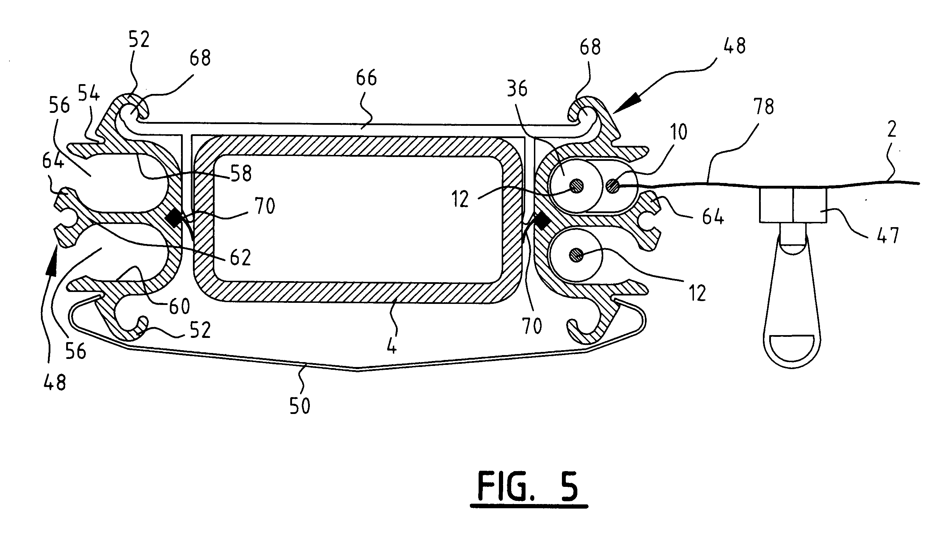

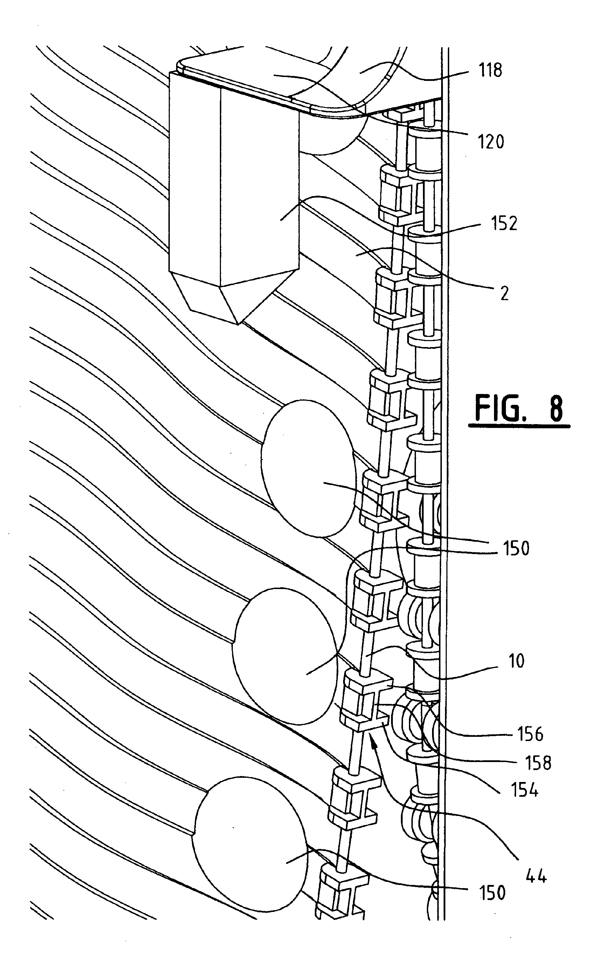

In a second embodiment the outer ends of the profiles, which in the first embodiment are curved (fig. 1), are provided with wheels. A first wheel 30 guides cable 12 in a first direction together with cord 10, and a second wheel 32 guides cable 12 in an opposite direction. Wheels 30 and 32 have a diameter in the order of 90 mm. A reversing wheel 25 or a drive wheel 34 is arranged on the outer ends of a guide profile 48. Reversing wheel 25 is a smooth wheel (fig. 2) and drive wheel 34 is a toothed wheel with grooves in the teeth into which the cable can fall (fig. 4). The bead-like bodies 36 on cable 12 consist of cylinders with raised edges on both ends. Bodies 44 on the edge of the screen comprise a middle part with raised edges on both ends, and are described hereinbelow with reference to fig. 8. A zip-fastener is optionally arranged with closure 47 in screen 2 close to cable 10 (fig. 5).

Similarly to the first embodiment, aluminium profiles 48 are arranged on both sides of support 4, which profiles are described with reference to fig. 5 and which are clamped against support 4 with stainless steel clamps (fig. 4).

Profiles 48 are symmetrical and extend in longitudinal direction over a random length along support 4 (fig. 5). Curved edges 52 are arranged on the top and bottom in cross-section, with recess 54 in the side remote from the support. Oval cavities 56 are open on one side and enclosed by walls 58, 60 at the top and bottom and separated by wall 62. Middle wall 62 ends in raised edges 64. Placed on an upper side of support 4 is a saddle 66 with raised edges 68 around which fall the edges 52 of the profiles.

At the outer ends clamp 50 drops into recesses 54 (fig. 5). Owing to the symmetry a clamp 50 can be arranged both on the underside and the upper side of the profiles. The gaps between support 4 and profiles 48 are sealed against airflow and/or light by strips 70 of rubber or a suitable plastic.

Inserting means 110 for inserting and coupling the edge 10 of the screen to cable 12 comprise a fixed part 112 which is arranged on an outer end of profile 48, a folding part 114 connected hingedly to the fixed part and locking means which in the shown preferred embodiment comprise a locking pin 116.

When folded together, the folding part 114 and fixed part 112 have at an outer end a form which has the same cross-section as the cross-section of profile 48 as shown in fig. 5, with two elliptic cavities having an opening on one side. The opposite end 118 of the first cavity, through which run the pulling means, is half-trumpet-shaped in cross-section as seen perpendicularly of the screen, while the cross-section as seen along the screen has straight walls with transverse pieces 120, 122 respectively.

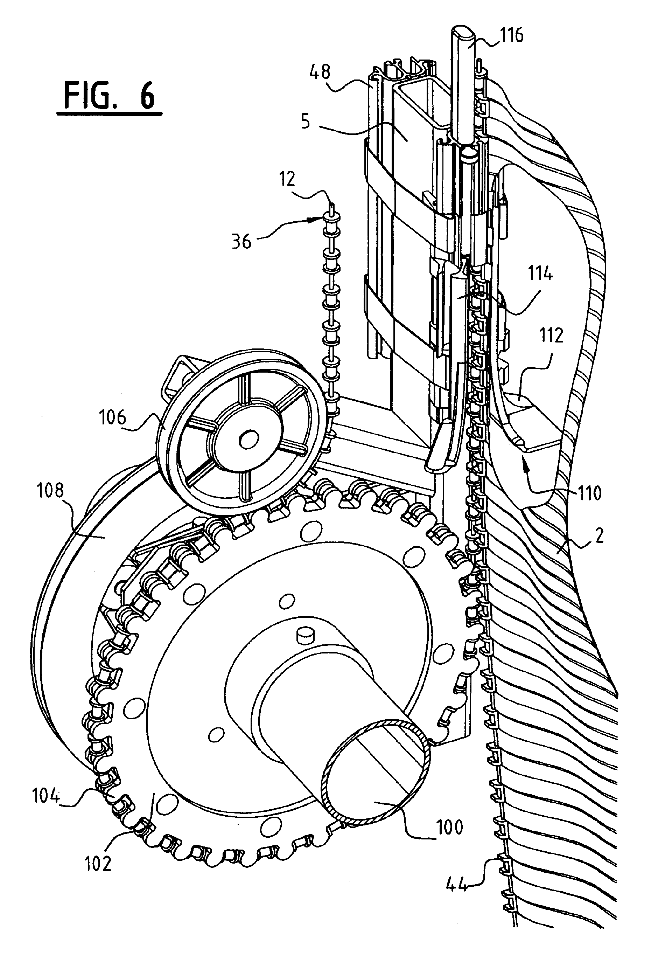

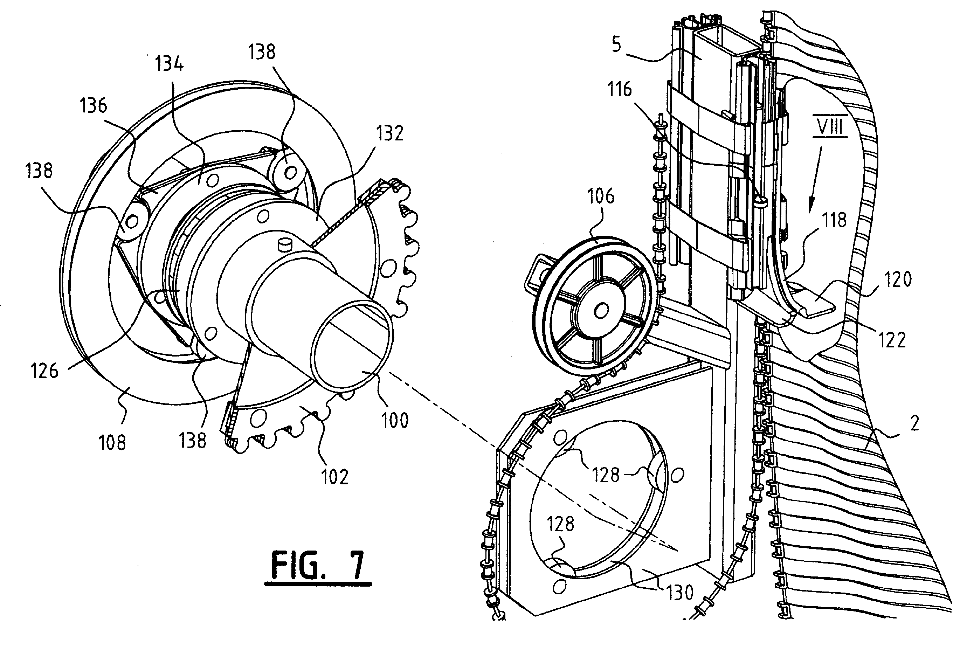

In the unfolded situation (fig. 6) the edge of the screen can be readily coupled to the pulling means. After the folding part is then folded against the fixed part, cable 12 pulls the edge further into the profile, wherein the inserting means ensure a correct coupling, comparable to a zip fastening (fig. 7). Locking pin 116 is displaced in order to lock the folding part so that it remains in the folded position.

In a preferred embodiment drive means are provided with an electric motor (not shown), which drives drive rod 100 (fig. 6). The electric motor has a torque of about 1000 Nm, whereby for instance ten rows of screens can be driven simultaneously. Arranged on the drive rod is a toothed ring 102, with teeth 104 between which the cams 36 of the pulling means fall for driving thereof. The toothed ring is relatively large, with a diameter of about 250 mm, so that the drive force is distributed over a greater number of cams 36. A guide wheel 106 is arranged above the toothed ring for guiding cable 12 in a correct position.

In a preferred embodiment (not shown) guide wheel 106 is arranged on column 5 via a resilient construction, so that in the case of stretching, which can amount to as much as 2% of the length of cable 12, the cable remains sufficiently taut.

On the opposite side of column 5 a reversing wheel 108 is arranged mounted on drive rod 100. An adjacent screening device thus runs in opposite direction, which is for instance advantageous when admitting relatively small quantities of air.

On the drive rod is arranged a hub 126 which rotates in bearings 128 on plates arranged on column 5. On both sides of the hub a flange 132, 134 is arranged on the drive rod. Toothed ring 102 is fixed to flange 132 and is thus driven by drive rod 100. On flange 134 is arranged a triangular plate 136 having on the corner points bearings 138 around which reversing wheel 108 is arranged in freely rotatable manner.

On a drive rod 100 two toothed rings are arranged per screen, for the purpose of driving the cables on both respective sides of the screen. Owing to this construction the toothed rings are driven synchronously and the screen is therefore moved synchronously into or out of the profiles, so that it is prevented from being pulled out of alignment. Adjacent screens driven by the same motor are also moved synchronously.

Close to an outer end of the screen are arranged detection elements 150, in the shown embodiment metal detection loops. Detection means 152, in the shown version an electromagnetic sensor, detect a passage of detection elements 150 and transmit this to the motor control (not shown) to automatically stop screen 2 from being arranged in or removed from the greenhouse.

The cams 44 on the edge of the screen are provided on the outer ends with plates 154, 156 which are arranged transversely of the cable and between which a wall 158 is arranged to prevent the cams from coupling incorrectly to cams 36.

Particularly for application outside a greenhouse, a screen is used in a further preferred embodiment which comprises two layers of foil 160, 162 which are fastened to each other at the edges. A fan 164 is coupled to the lower foil 160 and can blow air between the foils, so that foil 162 bulges. An advantage is that rainwater will run to the sides of foil 162 and is collected and drained in gutters 166.

The present invention is not limited to the above described preferred embodiments thereof, in which many modifications are possible; the scope of protection is defined by the appended claims.

## Claims

1. System for arranging and/or removing a screen some distance above a ground, in particular provided with crops, comprising:
- one or more supports which extend at least partly at the distance above the ground, wherein the supports are provided with guide means;
- a screen with edge which is suitable for guiding in or along the guide means of the supports; and
- pulling means which are arranged on at least one side of the guide means and which can be coupled releasably to the edge of the screen in order to pull the screen along the supports into a position substantially screening the ground or into a position leaving the ground clear,
wherein the pulling means transmit tensile force onto the edge of the screen over at least a considerable part of the length over which they are coupled to the edge.

2. System as claimed in claim 1, wherein the guide means are provided with inserting means for inserting and coupling the edge to the pulling means, comprising:
- a fixed part arranged close to an outer end of the guide means;
- a folding part arranged movably on the fixed part; and
- a lock for locking the folding part.

3. System as claimed in claim 2, wherein the edge of the screen comprises bead-like bodies.

4. System as claimed in claim 3, wherein the pulling means comprise a cable or chain provided with bead-like bodies for pulling the screen in and out, wherein the pitch of the bead-like bodies on the cable corresponds with the pitch of the bead-like bodies of the edge.

5. System as claimed in claim 3 or 4, wherein the bead-like bodies of the edge comprise plates which lie substantially perpendicularly of the edge of the screen and between which an edge part is arranged with a wall which runs parallel to the edge of the screen and has an outer end which is roughly the same as an outer end of the plates.

6. System as claimed in any of the claims 1-5, wherein the lock comprises a slidable locking pin.

7. System as claimed in claims 1-6, wherein the inserting means comprise a guide part for guiding the pulling means.

8. System as claimed in any of the claims 1-7, comprising
- a motor;
- one or more drive shafts coupled to the motor and arranged close to an outer end of the guide means;
- drive wheels arranged on the drive shaft for the purpose of driving the pulling means; and
- reversing wheels which are arranged mounted on a second shaft arranged close to an opposite end of the guide means.

9. System as claimed in claim 8, further comprising a hub which is arranged on the drive shaft and a bearing which is arranged on the supports and co-acts with the hub for bearing-mounting of the drive shaft.

10. System as claimed in claim 8 or 9, wherein the pulling means to which both edges of a screen are fastened are driven synchronously by drive wheels.

11. System as claimed in any of the claims 1-10, further comprising a detection element arranged close to an outer end of the screen and detection means for detecting the detection element which are arranged close to the inserting means.

12. System as claimed in claim 11, wherein the detection element comprises a metal loop which couples magnetically to the detection means.

13. System as claimed in any of the claims 1-12, wherein the screen comprises two layers of foil which are fastened to each other at the edges, and wherein the system comprises fan means to blow air between the layers.

14. Greenhouse, glasshouse, screen-covered hall or rain screen provided with a system as claimed in any of the claims 1-13.

15. Greenhouse as claimed in claim 14, wherein a predetermined number of screens are arranged adjacently of each other which are coupled to a motor and driven synchronously thereby.

16. Greenhouse as claimed in claim 15, wherein the arranging and removing directions of adjacent screens are substantially opposed.
